# EUROPÄISCHE PATENTSCHRIFT

(11) **EP 1 030 963 B1**
(45) Veröffentlichungstag und Bekanntmachung des Hinweises auf die Patenterteilung: **19.12.2001**
(21) Anmeldenummer: 98959873.5
(22) Anmeldetag: 11.11.1998
(51) Int. Cl.: F02B 27/02

(54) **SAUGROHR MIT EINLEGEKOMPONENTE**
INDUCTION PIPE WITH INSERTABLE COMPONENTS
COLLECTEUR D'ADMISSION DOTE D'ELEMENTS D'INSERTION

(30) Priorität: 11.11.1997 DE 19749830
(43) Veröffentlichungstag der Anmeldung: 30.08.2000
(73) Patentinhaber: FILTERWERK MANN & HUMMEL GmbH, 71631 Ludwigsburg (DE)
(72) Erfinder: DOBUSCH, Heinz, D-71672 Marbach (DE); LEIPELT, Rudolf, D-71672 Marbach (DE); PAFFRATH, Holger, D-71636 Ludwigsburg (DE)
(74) Vertreter: Voth, Gerhard, Dipl.-Ing.
(86) Internationale Anmeldenummer: EP9807227
(87) Internationale Veröffentlichungsnummer: WO9924702

(56) Entgegenhaltungen:
- EP-A- 0 551 209
- EP-A- 0 636 774
- DE-A- 3 807 193
- DE-A- 3 829 522
- DE-A- 3 940 486

## Beschreibung

### Stand der Technik

Die Erfindung betrifft ein Saugrohr für den Ansaugtrakt von Brennkraftmaschinen mit mindestens einer Einlegekomponente zur Bildung von Saugkanälen im Inneren des Saugrohrs nach der Gattung des Patentanspruches 1.

Das Vorsehen von Einlegeteilen in die Gehäuseschalen eines Saugrohres ist bekannt. Wie zum Beispiel aus der DE 44 99 626 deutlich wird, werden derartige Einlegeteile zur Bildung von Saugkanälen zu den Zylindern im Saugrohr verwendet. Auf diese Weise läßt sich die komplexe Geometrie von Saugrohren mit vergleichsweise einfachen, gußtechnisch unproblematischen Einzelteilen verwirklichen.

Ein weiterer Grund für das Vorsehen von Einlegekomponenten ist die Verwirklichung von Schaltsaugrohren. Wie in der DE 39 21 081 beschrieben, kann die Einlegekomponente zum Beispiel aus einer Schaltwalze bestehen, die die Verbrennungsluft in Abhängigkeit von ihrer Stellung vom Einlaß des Saugrohres zu unterschiedlichen Öffnungen in den Saugkanälen leitet. Die unterschiedlichen Öffnungen in den Saugkanälen sind derart angeordnet, daß durch Verstellen der Einlegekomponente eine mehrstufige Längenschaltung der Saugkanäle möglich wird. Durch eine Einlegekomponente gemäß der DE 38 25 000 kann auch eine stufenlose Verstellung der Saugkanallänge erreicht werden. Dies wird durch eine drehbar gelagerte Schaltwalze erreicht, die einen Wandabschnitt der Saugkanäle bildet und mit je einer Öffnung zu den Saugkanälen versehen ist. Durch Drehung der Schaltwalze wird die Saugkanallänge von diesen Öffnungen bis zu den Zylindereinlässen verstellt. Bei Schaltsaugrohren für Brennkraftmaschinen mit V-Anordnung der Zylinder sind die jeweils benachbarten Saugkanäle mit gegensinniger Durchflußrichtung angeordnet. Wie in der EP 848 145 A2 beschrieben, kann das Problem der Längenverstellung der Saugkanäle durch Anordnung von gegensinnig drehenden Schaltscheiben gelöst werden. Diese können zum Beispiel auf zwei Wellen gelagert sein, wobei der axiale Abstand der Antriebswellen zu einem Versatz der Schaltscheiben führt.

In der DE 38 07 193 A1 ist ein Saugrohr mit Schaltscheiben offenbart, welche alle auf einer Welle liegen. Diese Schaltscheiben werden zusammen mit der zentralen Betätigungswelle in das Saugrohrgehäuse, welches eine zylindrische Innenkontur aufweist, eingeschoben. Dabei wird eine Abdichtung über Kolbenringe vorgenommen, die in Nuten der Schaltscheiben gelagert sind und auf diese Weise aus Wandungsteilen des Gehäuses und der Schaltscheiben Saugkanäle für die Ansaugluft der Brennkraftmaschine bilden.

Die Saugrohrgestaltungen mit Schaltscheiben sind jedoch außerordentlich komplex im Aufbau. Vor allem ist das Dichtungsproblem noch nicht befriedigend gelöst, da die Dichtungen eine hohe Reibung erzeugen, was die Schaltkräfte, die zur Verstellung der Schaltscheiben notwendig sind, enorm ansteigen läßt. Andererseits muß eine zuverlässige Abdichtung der Saugkanäle erfolgen, da sonst die gewünschten Aufladungseffekte durch die Saugkanäle nicht erreicht werden können.

Im Übrigen birgt auch die Montage der Schaltscheiben mit den Kolbenringen Probleme, da diese im Durchmesser größer als die zylindrische Öffnung des Saugrohrgehäuses ausgeführt sein müssen. Zur Montage der Schaltklappen sind daher komplizierte Handhabungsschritte notwendig, die die Wirtschaftlichkeit der vorgeschlagenen Lösung vermindern.

Aufgabe der Erfindung ist es daher, ein Schaltsaugrohr mit Schaltscheiben zu schaffen, welches kostengünstig in der Herstellung, zuverlässig in der Funktion und vielseitig in der Anwendung ist. Diese Aufgabe wird durch die Merkmale des Patentanspruches 1 gelöst.

### Vorteile der Erfindung

Das erfindungsgemäße Saugrohr weist ein Gehäuse auf, welches in bekannter Weise einen Einlaß für die Verbrennungsluft und Auslässe zu den Zylindern aufweist. Weiterhin ist ein Einbauraum zur Aufnahme mindestens einer Einlegekomponente vorgesehen. Die Einlegekomponente ist an der Bildung der Saugkanäle beteiligt, und es ist die Beeinflussung der Saugkanallänge möglich. Die Einlegekomponente besteht aus mehreren Teilen, die gemeinsam die gewünschte Funktion erzielen. Die Werkstoffe für das Saugrohr und die Einlegekomponenten sind insbesondere Kunststoff oder Leichtmetall, wie Aluminium oder Magnesium.

Die Einlegekomponente ergibt zusammen mit dem Saugrohrgehäuse einen stufenlos längenveränderliches Saugrohr, für das die folgende Art der Abdichtung sinnvoll ist.

Hierbei wird die Schaltwalze aufgelöst in einzelne Schaltscheiben. Zwischen diesen Schaltscheiben sind jeweils Dichtscheiben montiert, die im Außengehäuse feststehen. Zum Außengehäuse hin abgedichtet sind diese Dichtscheiben durch einen elastischen Ringwulst. Der Dichtbereich zwischen Dichtscheiben und Stellscheiben ist gleichzeitig der Bereich eines axialen Gleitlagers. Über eine stirnseitig angeordnete Schraubenfeder wird dieses Paket aus Stell- und Dichtscheiben axial gerade so stark verspann, daß die Saugkanäle gegeneinander ausreichend dicht sind und das Scheibenpaket sich trotzdem noch leicht genug drehen läßt. Eine solche Anordnung ist durch ihren modularen Aufbau besonders vielseitig verwendbar und läßt sich sowohl für Reihenmotoren verwenden, bei denen die Scheiben alle in die gleiche Richtung gedreht werden, als auch für V-Motoren, bei denen sie gegeneinander verdreht werden.

Besonders vorteilhaft ist die Verwendung, solcher in Einzelscheiben aufgelöster Schaltwalzen von Stellscheiben in Saugrohren für Brennkraftmaschinen mit v-förmiger Zylinderanordnung. Der Antrieb dieser Variante muß derart ausgebildet sein, daß eine gegensinnige Drehung jeweils benachbarter Stedscheiben zustande kommt. Nur unter dieser Vorraussetzung kann die Länge der jeweils gegenläufig durchströmten Saugkanäle simultan verstellt werden.

Eine günstige Ausführungsform der Erfindung sieht vor, die Stellscheiben durch eine Welle so anzutreiben, daß jede zweite der Stellscheiben verdrehsicher auf der Welle angebracht ist. Die anderen Stellscheiben lassen sich auf der Welle verdrehen. Die festen und die losen Stellscheiben sind jeweils durch Umkehrgetriebe miteinander verbunden. Hierdurch wird erreicht, daß bei Verdrehung der Welle die jeweils benachbarten Scheiben sich gegensinnig drehen.

Das Umkehrgetriebe kann zum Beispiel als Kegelradgetriebe ausgeführt sein. Die jeweils benachbarten Stellscheiben weisen eine Kegelverzahnung auf. Die Stellscheiben können dabei dieselbe Geometrie aufweisen, also mit der selben Gußform hergestellt werden. Sie müssen dann um 180° verdreht auf die Welle geschoben werden, damit die Kegelverzahnungen sich gegenüber liegen. Zwischen diesen Verzahnungen ist ein Kegelrad angeordnet, welches raumfest im Gehäuse gelagert ist und in beide Kegelverzahnung eingreift. Dieses Kegelzahnrad bewirkt die Richtungsumkehr der losen Scheiben bei Verstellung der festen Scheiben. Eine raumfeste Lagerung der Kegelräder ist zum Beispiel in den zwischen den Stellscheiben angebrachten Dichtscheiben möglich, die sich im Einbauraum des Saugrohrgehäuses abstützen.

Eine andere Möglichkeit besteht in der Zwischenschaltung zweier Stirnräder zwischen den Stellscheiben, welche parallele Drehachsen zur Antriebswelle aufweisen und ineinander eingreifen. Diese sind derart angeordnet, daß jeweils eines dieser Stirnräder ein feste Stellscheibe und das andere der Stirnräder in die benachbarte lose Stellscheibe eingreift. Hierdurch wird eine Kopplung der benachbarten Stellscheiben erreicht, wobei eine Verdrehung der festen Stellscheibe eine gegensinnige Verdrehung der losen Stellscheibe zur Folge hat. Sofern die beiden Stirnräder den selben Durchmesser aufweisen, entsprechen sich die Verdrehwinkel der benachbarten Stellscheiben in ihrem Betrag.

Gemäß einer Modifikation der Erfindung können die Stellscheiben auch auf zwei gegensinnig drehende parallel angeordnete Wellen aufgesteckt werden Sie sind dann abwechselnd fest auf einer der beiden Wellen aufgesteckt. Die Wellen können zum Beispiel durch zwei Stirnräder miteinander verbunden sein,
wobei eine der beiden Wellen angetrieben wird. Auf diese Weise wird die gegenläufige Verdrehung der Stellscheiben erreicht. Voraussetzung ist, daß die Stirnräder, die die beiden Wellen verbinden den gleichen Durchmesser aufweisen. Um eine Verträglichkeit mit anderen Einbaukomponenten des Baukastensystems zu erreichen, müssen die zwischen den Stellscheiben angeordneten Dichtscheiben eine Außenkontur aufweisen, welche die Konturen der Stellscheiben beider Wellen beinhaltet. Auf diese Weise kann der Einbauraum zylindrisch gestaltet werden, da der Versatz der Wellen und der Stellscheiben nicht zu einer komplexeren Innenstruktur des Einbauraums führt. Die Abdichtung der Saugkanäle untereinander wird dann durch die Dichtscheiben erzielt, welche an den Gegenflächen des zylindrischen Einbauraumes zur Anlage kommen.

Gemäß einer weiteren Modifikation der Erfindung ist ein Stellantrieb vorgesehen, welcher zwei gegensinnig drehende Wellen aufweist, deren Antriebsräder in Innenzahnkränze der Schaltscheiben eingreifen. Hierbei werden die Schaltscheiben so angetrieben, daß jede erste, dritte, fünfte usw. von der einen Welle und jede zweite, vierte, sechste usw. von der anderen Welle angerieben werden, wodurch eine gegensinnige Verdrehung zustande kommt. Die drehenden Wellen sind dabei raumfest im Gehäuse gelagert. Eine Lagerung der Stellscheiben auf einer zentralen Welle ist nicht notwendig, wodurch vorteilhafterweise die radialen Stützrippen überflüssig werden, welche die Dichtscheibe mit einer zentralen Nabe verbinden. Dadurch sinkt der Strömunswiderstand im Saugrohr, und es kann Gewicht gespart werden. Die Lagerung der Dichtscheiben wird durch die Antriebswellen und mindestens eine weitere Achse, die mit Losrädern versehen ist, gewährleistet. Auf den Wellen können zur Lagerung ebenfalls zusätzliche Losräder angebracht sein. Die Losräder können als Zahnräder ausgeführt sein, welche ebenfalls in den Innenzahnkranz der Stellscheiben eingreift. Es ist aber auch möglich, diese ohne Verzahnung auszuführen, welche sich in einer entsprechenden Innenfläche der Stellscheibe abstützen.

Ein weiterer Vorteil des erfindungsgemäßen Saugrohres liegt in der Gestaltung des für den Einbau der Einlegekomponente vorgesehenen Einbauraumes. Dieser ist in seiner Innenkontur derart gestaltet, daß sich unterschiedliche Einlegekomponenten einsetzen lassen. Diese unterscheiden sich insbesondere in ihrer Komplexität. Auf diese Weise kann in demselben Saugrohrgehäuse eine Vielfalt von Innenstrukturen erzeugt werden. Hierzu muß konstruktiv eine eindeutige Trennung der Aufgaben des Saugrohrgehäuses und der Einlegekomponenten vorgesehen werden. Weiterhin müssen die unterschiedlichen Einlegekomponenten hinsichtlich der geometrischen Anforderungen Gemeinsamkeiten aufweisen. So ist zum Beispiel unabhängig von der Art der Einlegekomponente immer eine Abdichtung der Saugkanäle gegeneinander notwendig, damit diese ihre positive Wirkung auf das Ansaugverhalten der Brennkraftmaschine entfalten können.

Eine besondere Ausführungsform der Erfindung schlägt daher vor, den Einbauraurn mit im wesentlichen zylindrischen Konturen zu versehen. Dadurch wird ein klar definierter und vielseitig verwendbarer Einbauraum geschaffen. Die

Anpassung des Einbauraums an die zylindrische Innenkontur ist vorrangig in den Bereichen notwendig, in denen das Saugrohrgehäuse mit der Einlegekornponente in Kontakt kommt. Dabei muß nicht unbedingt eine kreiszylindrische Innenkontur verwirklicht werden. Es sind insbesondere elyptische oder aus zwei Teilkreisen bestehende Querschnittsflächen des zylindrischen Einbauraumes denkbar. Im Normalfall ist der Einbauraum derart gestaltet, daß die Saugkanäle das Einlegeteil schneckenförmig umlaufen. Ein zylindrischer Einbauraum hat zusätzlich den Vorteil, daß der Einbau der Einlegekomponente mit einer Fügerichtung parallel zur Mittelachse des Zylinders erfolgen kann. Es kann daher auf eine Teilung des Gehäuses verzichtet werden, weil der Einbau in die Gehäuseschalen vor deren Zusammensetzen nicht notwendig ist. Hierdurch entsteht eine größeren Gestaltungsfreiheit für das Saugrohrgehäuse. Dieses kann zum Beispiel im Kernausschmelzverfahren hergestellt werden.

Gemäß einer besonders vorteilhaften Ausführung des Erfindungsgedankens ist das Saugrohr für den Einbau in eine Brennkraftmaschine mit v-förmiger Zylinderanordnung vorgesehen. Hierbei muß die Einlegekomponente aus mehreren Teilen zusammengesetzt sein. Zu diesen Teilen gehören insbesondere die Stellscheiben, die sich zur Längenveränderung der Saugkanäle wechselweise gegeneinander drehen müssen. Dies liegt daran, daß die Saugkanäle zu den beiden Zylinderbänken jeweils gegensinnig durchströmt werden. Sofern für diese Bauform ein im wesentlichen zylindrischer Einbauraum geschaffen wird, ist dieser besonders gut für Einbaukomponenten auch geringerer Komplexität geeignet.

Durch das erfindungsgemäße Saugrohr läßt sich auf diese Weise ein Baukastensystem entwickeln. Es läßt sich zum Beispiel für eine Brennkraftmaschine ein Saugrohrgehäuse herstellen, welches zur Aufnahme einer stufenlos verstellbaren, einer mehrstufig verstellbaren und einer nicht verstellbaren Einlegekomponente eignet. Es lassen sich also dabei sogar schaltbare und nicht schaltbare Saugrohrvarianten realisieren. Dadurch werden im Vergleich zum Stand der Technik, die Werkzeugkosten für die Saugrohrgehäuse zweier der drei beschriebenen Varianten eingespart. Dabei muß das Baukastensystem nicht auf ein Saugrohr einer einzigen Brennkraftmaschine beschränkt bleiben. Für die scheibenförmig aufgebaute Einlegekomponente ist es zum Beispiel denkbar, daß diese für unterschiedlich viele Zylinderzahlen, beispielsweise 6 oder 8 Zylinder, Verwendung findet. Wird die Geometrie des Einbauraums beibehalten, so kann für eine andere Brennkraftmaschine auch ein Saugrohrgehäuse geschaffen werden, welches sich der bereits bestehenden Einlegekornponenten bedient. Auf diese Weise werden die Werkzeugkosten für unterschiedliche Einlegekomponenten eingespart. Die Vereinfachung der Lagerhaltung sowie die Einsparung von Werkzeugkosten erhöhen die Wirtschaftlichkeit der Saugrohre erheblich. Weiterhin kann durch Erreichung höherer Stückzahlen eine Verringerung der Herstellkosten der Einzelteile erreicht werden.

Gemäß einer besonderen Ausführungsform der Erfindung, weist das Saugrohr ein hohles Einlegeteil auf, welches starr mit dem Saugrohr verbunden wird. Durch dieses Einlegeteil werden die Saugkanäle teilweise mitgebildet, wobei durch entsprechende Öffnungen die Durchleitung von Verbrennungsluft vom Hohlraum des Einlegeteils in die Saugkanäle möglich ist. Der Hohlraum kann bei dieser Variante einen Sammelraum bilden, in den ein Einlaß für die Verbrennungsluft mündet. Auf diese Weise wird mit vorhandenen Gehäuseteilen und einem sehr einfachen Einlegeteil eine kostengünstige Variante für das Saugrohr geschaffen.

Eine weitere Ausführungsform der Erfindung sieht vor, daß die Einlegekomponente eine Schaltwalze aufweist, die durch einen Antrieb verdreht werden kann. Durch Drehung der Schaltwalze kann die Länge des Ansaugweges zwischen Einlaß und Austritten des Saugrohres verstellt werden. Dabei kann die Schaltwalze einstückig oder mehrstückig aufgebaut sein. Es ist zum Beispiel möglich, die Schaltwalze in einen Zylindermantel unterzubringen, dessen Zylinderwandung die Saugkanäle gegeneinander abdichtet und von dem für die Schaltwalze verbleibenden Einbauraum trennt. In der Zylinderwandung sind pro Saugkanal mehrere Fenster vorgesehen. Die Schaltwalze weist nur ein Fenster pro Saugkanal auf, welches durch Drehung derselben mit verschiedenen Fenstern des Zylindermantels in Deckung gebracht werden kann. In Abhängigkeit vom gewählten Fenster werden unterschiedliche Längen der Saugkanäle realisiert. Eine bevorzugt zweistufige Längenschaltung der Saugrohre wird gemäß dieser Variante mit einem geringen Aufwand an Baukomponenten möglich.

Es ist vorteilhaft, den Zylindermantel als Teil der Einlegekomponente auszuführen. Auf diese Weise entsteht eine kompakte leicht zu handhabende Baueinheit die in das Saugrohrgehäuse eingesetzt werden kann. Wird auf den Zylindermantel verzichtet, so kann die einstückige Schaltwalze auch zur stufenlosen Verstellung eines Saugrohres für einen Verbrennungsmotor mit reihenförmiger Zylinderanordnung verwendet werden. Eine Abdichtung der einzelnen Saugkanäle ist dann mit Hilfe der Schaltwalze zu realisieren. Hierdurch ergibt sich für das Einzelteil der Schaltwalze eine weitere Anwendungsmöglichkeit, wodurch die Wirtschaftlichkeit dieser Variante erhöht werden kann.

Wird die mit Fenstern versehene einstückige Schaltwalze für eine Brennkraftmaschine mit einer V-förmigen Zylinderanordnung verwendet, so müssen die Fenster, die in der Schaltwalze als Öffnung dienen, für jeweils benachbarte Saugkanäle versetzt angeordnet werden. Auf diese Weise kann durch Drehung der Schaltwalze in eine Drehrichtung eine gleiche Länge der Saugkanäle erreicht werden, obwohl diese gegensinnig durchströmt werden. Um die Fenster zu verschließen sind in der Schaltwalze Fensterdichtungen vorgesehen, die die Fenster umrahmen. Es ist jedoch keine Abdichtung des Fensters im Zylindermantel mit der längsten Saugkanallänge notwendig. Dieses kann bei Realisierung kürzerer Saugkanallängen geöffnet bleiben, da sich die Ansaugluft den Weg des geringsten Widerstandes, also durch das Fenster für die kürzere Saugkanallänge sucht. Für Brennkraftmaschinen mit v-förmiger Zylinderanordnung ergibt sich durch Verwendung einer einstückigen Schaltwalze im Vergleich zur bereits bekannten Scheibenbauform eine enorme Verringerung an Einzelteilen. In diesem Fall läßt sich nicht nur die Wirtschaftlichkeit eines Baukastensystems, sondern auch der Lösungsvariante als solcher wesentlich verbessern.

Es ist vorteilhaft, die Fensterdichtung in der Schaltwalze zu befestigen. Hierzu werden um den Fensterrahmen Fensternuten vorgesehen, die zur Führung der Dichtungen geeignet sind. Weiterhin sind Federelemente vorgesehen, die sich im Nutgrund der Fensternuten abstützen, und die Fensterdichtungen an die Zylinderwandung des Zylindermantels andrücken, wodurch die Dichtwirkung erzielt wird. Die Federelemente können zum Beispiel aus einer Wellfeder bestehen, die vor Montage der Fensterdichtung in die Fensternut eingebracht wird. Allerdings kann das Federelement auch in die Fensterdichtung integriert sein. Zu diesem Zweck werden Biegeelemente an den in der Fensternut befindlichen Rand der Fensterdichtung angespritzt. Dank dieser nur örtlich wirkenden Fensterdichtungen wird die Reibung und damit die Stellkraft, die zum Verdrehen der Schaltwalze nötig ist deutlich verringert.

### Zeichnung

Weitere Einzelheiten der Erfindung werden in den Zeichnungen anhand von schematischen Ausführungsbeispielen beschrieben.
Hierbei zeigen
- Figur 1: den Längsschnitt durch ein Saugrohr für eine Brennkraftmaschine mit v-förmiger Zylinderanordnung, in das eine Einlegekomponente mit einstückiger Schaltwalze zur zweistufigen Verstellung der Saugkanäle eingebracht ist,
- Figur 2: den Schnitt A-A gemäß Figur 1,
- Figur 3: den Schnitt B-B gemäß Figur 1,
- Figur 4: die Gestaltung einer Fensterdichtung in Anlehnung an das Detail x gemäß Figur 3, wobei die Fensterdichtung eines der Fenster in der Zylinderwandung verschließt,
- Figur 5: ein Saugrohrgehäuse ähnlich dem Schnitt A-A aus Figur 1, wobei anstelle der einstückigen Schaltwalze ein starr im Saugrohrgehäuse fixiertes Einlegeteil eingebracht ist,
- Figur 6: ein Saugrohrgehäuse ähnlich dem Schnitt A-A aus Figur 1, wobei in den Einbauraum Stellscheiben zur stufenlosen Verände rung der Saugkanallänge eingebracht sind,
- Figur 7: den Querschnitt durch ein Saugrohr gemäß Figur 6 in einer Dar stellung in Anlehnung an Figur 1, wobei die Drehrichtungsumkehr der lose auf der Welle laufenden Stellscheiben durch einen Kegel trieb erreicht wird.
- Figur 8: den Aufbau einer Dichtscheibe, wie sie in einer Saugrohrvariante gemäß Figur 7 zum Einsatz kommt, wobei die Dichtscheibe zur Realisierung einer Drehrichtungsumkehr benachbarter Stellsche ben ein Stirnradgetriebe aufweist,
- Figur 9: ein mit Stellscheiben versehenes Saugrohr in Anlehnung an die in Figur 6 dargestellt Variante, wobei der Antrieb in Form einer In nenverzahnung so erfolgt, daß die rechtsdrehende Welle die linksdrehenden Stellscheiben verdreht und die linksdrehende Welle die jeweils dazwischen liegenden rechtsdrehenden Stell scheiben,
- Figur 10: eine Saugrohrvariante in Anlehnung an die Figur 6, wobei die Stellscheiben jeweils zentral um zwei separate Antriebswellen drehbar gelagert sind und
- Figur 11: einen Längsschnitt durch ein Gehäuse gemäß Figur 10, wobei der Schnitt gemäß Figur 10 durch die Ebene C-C angedeutet ist.

### Beschreibung der Ausführungsbeispiele

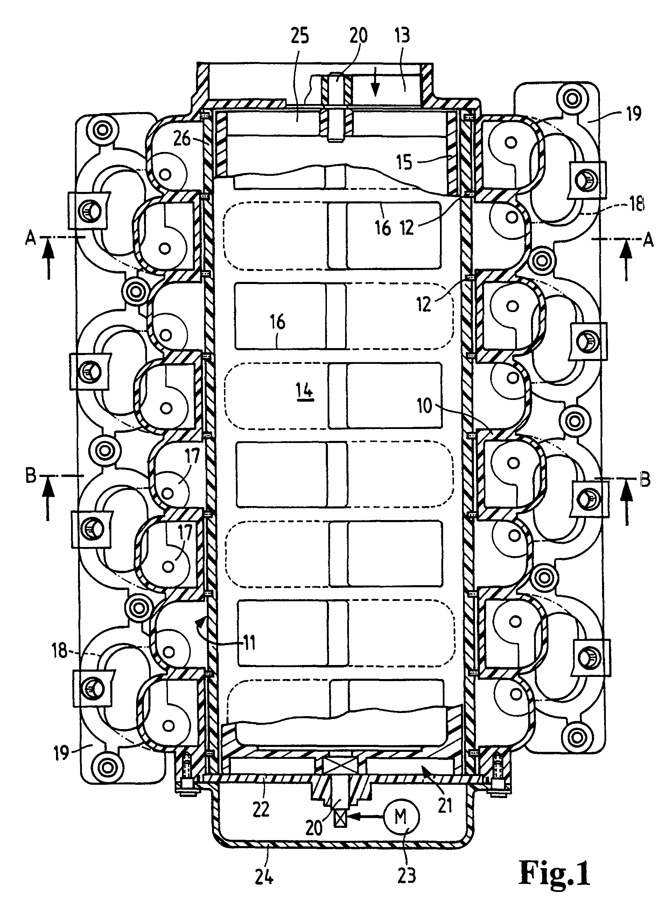

Das Saugrohr gemäß Figur 1 besteht aus einem Saugrohrgehäuse 10, welches einen Einbauraum 11 aufweist, welcher zumindest im Bereich von Dichtringen 12 eine kreiszylindrische Innenkontur hat. Die Ansaugluft für die Verbrennungskraftmaschine tritt durch einen Einlaß 13 in den als Sammelraum 14 fungierenden Hohlraum einer in den Einbauraum 11 eingebauten Einlegekomponente 15 ein. Von dort wird die Ansaugluft durch Durchgänge 16 in Saugkanäle 17 eingeleitet, die durch die Außenwände des Saugrohrgehäuses 10 und eine Zylinderwandung 26 gebildet werden. Durch die Saugkanäle wird die Luft zu zylinderseitigen Austritten 18 geleitet, die in Flansche 19 zur Montage des Saugrohrs auf dem Zylinderkopf untergebracht sind. Die Schaltwalze weist an ihren Stirnflächen Lagerzapfen 20 auf, mit Hilfe derer sie drehbar im Saugrohrgehäuse 10 gelagert ist. Der Einbau der Schaltwalze kann durch eine Einbauöffnung 21 erfolgen, die sich auf der Stirnseite des Saugrohrgehäuses befindet. Auf der Seite der Einbauöffnung wird der Lagerzapfen in einem Lagerschild 22 aufgenommen und auf dieser Seite mit einem schematisch dargestellten Antrieb 23 versehen, anschließend wird die Einbauöffnung durch einen Deckel 24 verschlossen. Im Bereich des Einlasses 13 weist die Schaltwalze keine geschlossene Deckelfläche auf sondern der Lagerzapfen 20 wird durch Radialrippen 25 gehalten. Auf diese Weise kann die Luft vom Einlaß 13 in den Sammelraum 14 gelangen. Die Schaltwalze ist nur in ihren Stirnbereichen geschnitten dargestellt. Die Anordnung der Durchgänge 16 ist im ungeschnittenen Bereich angedeutet. Die Schaltwalze befindet sich in der Stellung kurzer Saugkanäle. Es ist die wechselseitige Anordnung zu erkennen, die aufgrund der V-förmigen Zylinderanordnung zustande kommt.

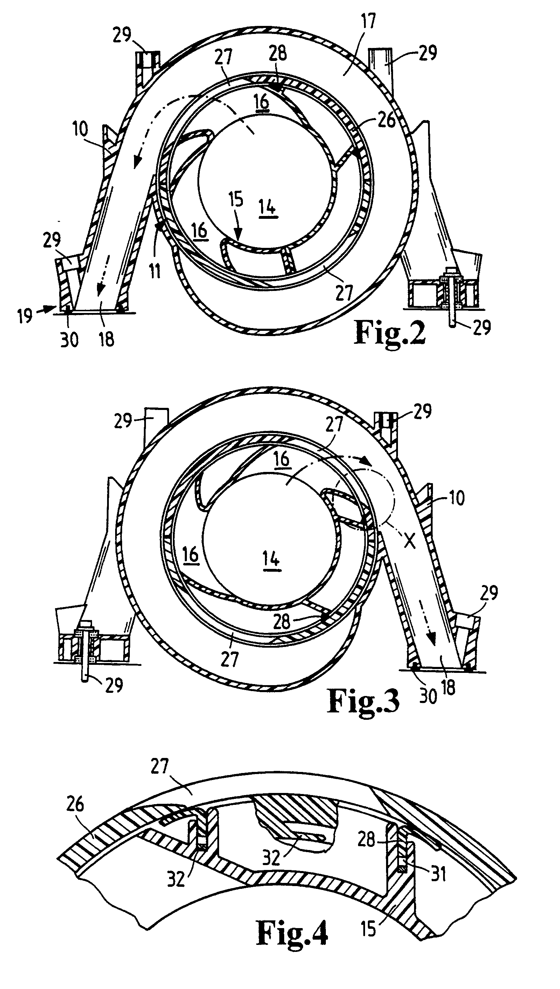

Der Figur 2 läßt sich die Funktionsweise der Schaltwalze 15 entnehmen. Diese ist durch die Zylinderwandung 26 eingeschlossen. Die Zylinderwandung besitzt zwei Fenster 27 die sich zu den Saugkanälen 17 öffnen und dabei unterschiedlich weit von den zylinderseitigen Austritten 18 entfernt sind. Der in der Schaltwalze 15 untergebrachte Sammelraum 14 weist die Durchgänge 16 auf, die in Abhängigkeit von der Winkelstellung der Schaltwalze 15 mit den Fenstern 27 in Deckung gebracht werden können, wodurch die Leitung der Ansaugluft ermöglicht wird. Die Durchgänge 16 sind derart in der Schaltwalze 15 untergebracht, daß jeweils nur eine der beiden Durchgänge mit einem Fenster 27 in Deckung kommen kann. Der andere Durchgang wird durch die Zylinderwandung 26 abgedeckt. In der Stellung der Schaltwalze für einen langen Saugkanal wird das Fenster, welches den kurzen Saugkanal öffnet zusätzlich durch eine Fensterdichtung 28, die an der Schaltwalze 15 montiert ist, abgedeckt. Dadurch wird ein Kurzschluß der Ansaugluft durch dieses Fenster vermieden. Am Saugrohr sind weiterhin diverse Einrichtungen 29 zur Befestigung beispielsweise eines Luftfilters oder diverser Anschlußteile am Saugrohrgehäuse angebracht. Die Anschlußstelle am Flansch 19 ist zusätzlich durch eine Flanschdichtung 30 abgedichtet und schwingungstechnisch entkoppelt.

Figur 3 zeigt eine Figur 2 entsprechende Schnittdarstellung des Saugrohres. Der Unterschied liegt lediglich in der umgekehrten Durchflußrichtung des Saugkanals. In diesem Bereich ist daher auch die Schaltwalze anders gestaltet. Die Anordnung der Durchgänge 16 und der Fensterdichtung 28 sind in den beiden in Figur 2 und 3 dargestellten Bereichen so gewählt, daß durch eine Linksdrehung der Schaltwalze die Fensterdichtung 28 vor das Fenster 27 für den kurzen Saugkanal geschoben wird sowie das Fenster für den langen Saugkanal freigegeben wird. Durch eine anschließende Rechtsdrehung der Schaltwalze wird das Fenster für den kurzen Saugkanal freigegeben und das Fenster für den langen Saugkanal verschlossen.

Figur 4 zeigt eine mögliche Ausgestaltung für die Fensterdichtung 28. Diese ist in einer Fensternut 31 geführt und stützt sich an der Zylinderwandung 26 ab.

Dabei verschließt sie das Fenster 27. An die Fensterdichtung sind Federelemente 32 angespritzt, die sich im Nutgrund der Fensternut abstützen und so einen Anpreßdruck der Fensterdichtung gegen die Zylinderwandung 26 erzeugen.

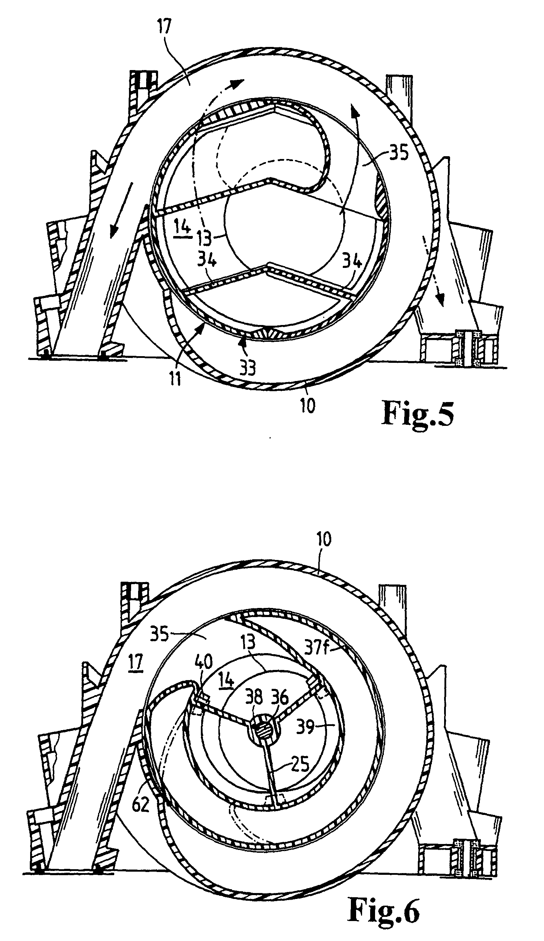

Figur 5 zeigt die Möglichkeit auf, in ein Saugrohrgehäuse 10 gemäß Figur 1 ein Einlegeteil 33 einzubringen, welches unbeweglich im Einbauraum 11 fixiert ist. Dieses Teil besteht aus zwei Halbschalen 34 die zum Beispiel virbrationsverschweißt sein könnten. Im Inneren des Einlegeteils ist der Sammelraum 14 abgeteilt, in den der Einlaß 13 führt. Öffnungen 35 münden in die einzelnen Saugkanäle, wobei ein Teil der durch das Saugrohrgehäuse gebildeten Saugkanäle ungenutzt bleibt. Die durchgezogenen Pfeile geben die Durchflußrichtung der Ansaugluft durch den geschnitten dargestellten Saugkanal 17 wieder. Der gestrichelt eingezeichnete Pfeil deutet die Flußrichtung der Ansaugluft in dem hinter der Zeichenebene befindlichen Saugkanal mit entgegengesetzter Flußrichtung des Fluids an.

In Figur 6 ist eine Saugrohrvariante mit stufenlos verstellbaren Saugkanälen dargestellt. Das Saugrohrgehäuse 10 entspricht dem in Figur 1 dargestellten. Durch das Zentrum des Saugrohres läuft eine Welle 36 auf die eine feste Stellscheibe 37f über eine Paßfeder 38 formschlüssig verbunden ist. Durch Drehung der Welle 36 erfolgt eine stufenlose Längenverstellung der Saugkanäle 17 um einen Verdrehwinkel von bis zu 270°. Um eine Durchleitung der Luft vom Einlaß 13 in den Sammelraum 14 zu gewährleisten, sind die Stellscheiben durch die Radialrippen 25 gehalten. Die Stellscheiben sind mit einer Kegelverzahnung 39 versehen, die im Bereich der Öffnung 35 ausgespart ist. In die Kegelverzahnung greifen Kegelräder 40 ein.

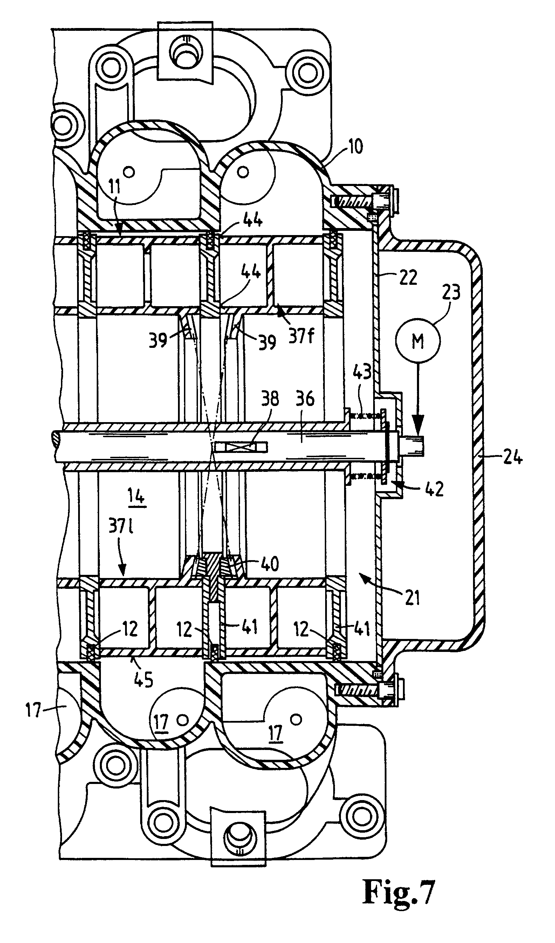

Die Funktion der Kegelräder läßt sich der Figur 7 entnehmen. Hier ist eines der Kegelräder 40 dargestellt, welches im Innenumfang einer Dichtscheibe 41 gelagert ist. Das Kegelrad greift in die beiden Kegelverzahnungen 39 der Stellscheiben ein. Die äußerste Stellscheibe ist durch die Paßfeder 38 auf der Welle 36 drehfest gelagert. Die Stellscheibe daneben kann auf der Welle verdreht werden. Ihre Winkelposition ist jedoch durch das Kegelrad 40 eindeutig bestimmt. Wird die Welle 36 durch den schematisch dargestellten Antrieb 23 verdreht, so nimmt dieser die feste Stellscheibe 37f mit. Die lose Stellscheibe 37l wird durch das Kegelrad 40 zu einer gegenläufigen Drehbewegung um denselben Betrag gezwungen.

Die Welle 36 ist mit den Lagerzapfen 20 in Figur 1 vergleichbar gelagert. Zur Montage kann zum Beispeil zunächst das gesamte Stellelement zu einer vormontierten Einheit zusammengefaßt werden. Hierfür werden im Wechsel eine lose Stellscheibe 37l, eine Dichtscheibe 41, und eine feste Stellscheibe 37f, danach wieder eine Dichtscheibe und so weiter auf die Welle geschoben. Am antriebsseitigen Ende der Welle wird ein Andrückmechanismus 42, der eine Andrückfeder 43 enthält montiert. Der Andrückmechanismus gleicht eventuelle Toleranzen der Stellscheiben 37 und Dichtscheiben 41 aus, sorgt aber auch für eine Dichtwirkung zwischen Laufflächen 44, die durch Stellscheiben 37f, 37l und Dichtscheiben 41 gebildet werden. Nach dem Einschieben der Stellkomponente in den zylindrischen Einbauraum 11 wird der Lagerschild 22 eingesetzt, der durch das antriebsseitige Ende der Welle 36 durchstoßen wird. Eine Lagerung der Welle an dieser Stelle ist nicht notwendig, da diese in genügender Weise durch die Naben der Dichtscheiben 41 geführt ist. An dem Wellenende wird der Antrieb 23 befestigt. Anschließend wird der Deckel 24 auf der Einbauöffnung 21 montiert.

Die Dichtscheiben 41 übernehmen eine Dichtwirkung in mehrfacher Hinsicht. Zum einen stützen sie sich gehäusefest im Einbauraum 11 ab. Hierzu sind die Dichtringe 12 vorgesehen. Durch diese Dichtung wird zum einen eine Abdichtung der benachbarten Saugkanäle 17 erreicht, zum anderen werden die Dichtscheiben durch den Anpreßdruck der Dichtung an einer Verdrehung gehindert. Da die Kegelräder 40 in den Dichtscheiben fixiert sind, ist dies für eine freie Kraftübertragung zwischen den festen Stellscheiben 37f und den losen Stellscheiben 37l notwendig. Die Saugkanäle werden teilweise durch Wandteile des Saugrohrgehäuses 10 gebildet. Eine Innenkontur 45 der Saugkanäle 17 ist jedoch Teil der Stellscheiben 37f, 37l. Um eine Abdichtung der Saugkanäle 17 zum Sammelraum 14 zu erreichen müssen die Stellscheiben und die Dichtscheiben aneinander anliegen. Hierzu sind die Laufflächen 44 vorgesehen. Um den Verstellwiderstand in Grenzen zu halten, ist der Anpreßdruck der aufeinander laufenden Scheiben durch die Andrückfeder 43 definiert. Der Werkstoff der Dichtscheiben 41 ist bevorzugt ein verschleißfester Reibungspartner, zum Beispiel Bronze oder Federstahl.

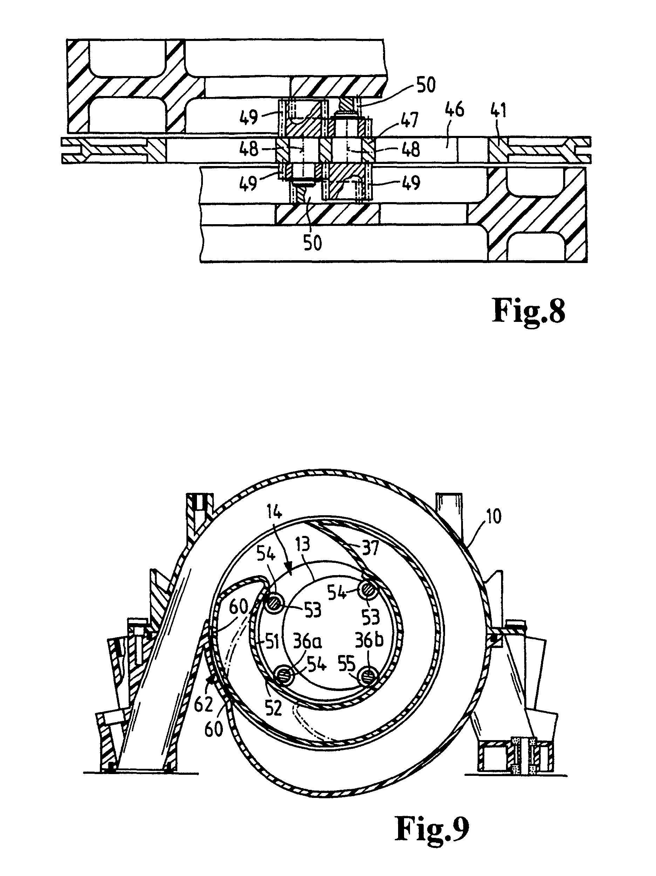

Figur 8 stellt eine Alternative zum Kegelrädertrieb dar. In dieser Bauform weist die Dichtscheibe eine durch Speichen 46 gestützte Doppelnabe 47 auf, in der auf zwei Drehachsen 48 ein ineinandergreifender Satz Stirnräder 49 untergebracht ist. Die Drehachsen sind derart exzentrisch in der Doppelnabe untergebracht, daß je eines der Stirnräder 49 unterschiedlicher Drehachsen 48 in eine Stirnverzahnung 50 der angedeuteten benachbarten Stellscheiben eingreift. Auf diese Weise wird eine Richtungsumkehr zwischen diesen Stellscheiben herbeigefüht, wie sie prinzipiell zu Figur 7 beschrieben wurde.

Ein alternatives Antriebskonzept für die Stellscheiben 37 ist in Figur 9 dargestellt. In dieser Variante tragen die den Sammelraum 14 bildenen Innenwände 52 der Stellscheiben 37 eine Innenzahnkranz 51. Den Sammelraum durchlaufen zwei Wellen 36a, 36b. Die Wellen sind in den Stirnseiten des Gehäuses in nicht dargestellter Weise gelagert und angetrieben. Sie weisen mit der Welle drehfest verbundene Zahnräder 55 auf, die jeweils jede zweite der Stellscheiben antreiben. Da sich die Wellen 36a, 36b gegensinnig drehen ist somit eine Gegenläufige Verdrehung der Stellscheiben möglich. Durch Vorsehen zweier weiterer Achsen 53 die mit in den Innenzahnkranz 51 eingreifenden Losrädern 54 versehen sind, wird eine Lagerung der Stellscheiben 37 erreicht. Eine zentrale Lagerwelle ist in diesem Ausführungsbeispiel nicht vorgesehen. Auf den Wellen 36a, 36b können weitere Losräder 54 für die jeweils von der Welle nicht angetriebenen Stellscheiben angebracht sein. Der Anpreßdruck, der in dem Ausführungsbeispiel von Figur 7 durch die Andrückfeder 43 erzeugt wird, kann in dieser Variante durch eine Tellerfeder erzeugt werden, die sich im Gehäusedeckel abstützt (nicht dargestellt). Das Saugrohrgehäuse 10 kann in derselben Bauart ausgeführt sein, wie in Figur 1 beschrieben.

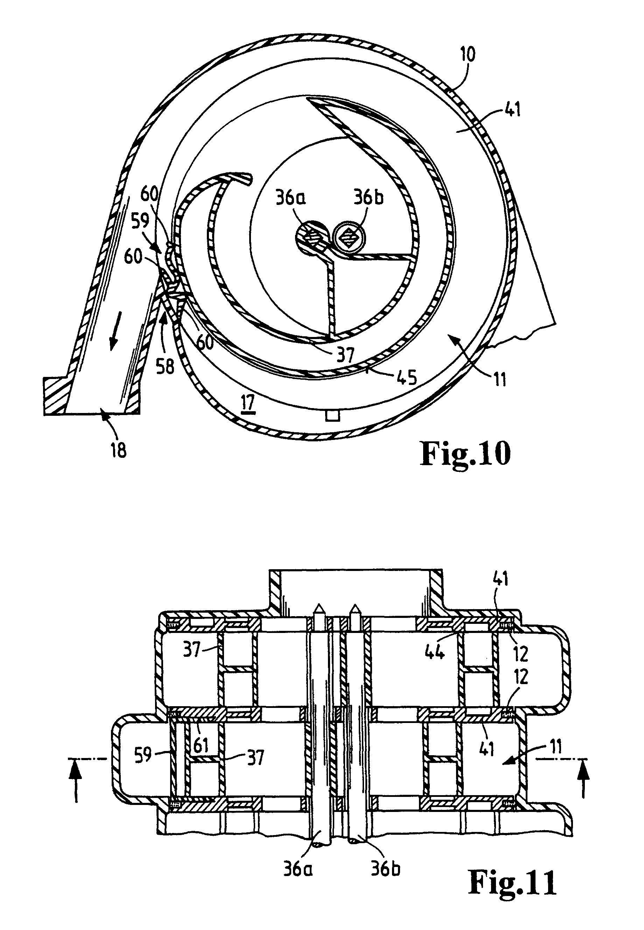

In Figur 10 ist schematisch ein Saugrohrgehäuse 10 ähnlich Figur 1 dargestellt in das eine zylindrische Einbaukomponente eingeschoben ist. Die Außenkontur der Einbaukomponente wird durch die Dichtscheiben 41 gebildet. Die sich über die Dichtringe 12 (siehe Figur 11) im Einbaurraum 11 abstützen. Die Stellscheiben 37 sind auf zwei exzentrisch im Gehäuse gelagertern Wellen 36a, 36b drehfest angebracht. Daher weisen sie einen geringeren Durchmesser auf, als die Dichtscheiben 41, da diese die Umhüllende für die Außenkonturen der auf beiden Wellen 36a, 36b angebrachten Dichtscheiben bilden muß. Wie zu Figur 9 beschrieben, treiben die Wellen 36a, 36b abwechselnd die Stellscheiben 37 an, wodurch eine gegensinnige Verdrehung zustande kommt. Um einen Kurzschluß zwischen dem Ende des Saugkanals 17 und den Austritten 18 zu vermeiden ist in einem Trennbereich 58 eine Dichtbrücke 59 angebracht, die sich über Dichtlippen 60 einserseits an der Wand des Einbauraumes 11 und andererseits auf dem die Innenkontur 45 des Saugkanals 17 bildende Wandteil der Stellscheiben 37 abstützt.

Der Figur 11 läßt sich die Wirkung der Dichtscheiben 41 entnehmen. In bereits beschriebener Weise stützen sich die Dichtscheiben über Dichtung 12 in der Einbauöffnung 11 ab. Die Laufflächen 44 zu Erzeugung einer Dichtwirkung zwischen Stellscheiben 37 und Dichtscheiben 41 müssen entsprechend der Anordnung der Dichtscheiben 41 exzentrisch ausgebildet sein. Die Dichtbrücke 59 ist über eine Steckverbindung 61 fest mit zwei benachbarten Dichtscheiben 41 verbunden.

## Patentansprüche

1. Saugrohr für den Ansaugtrakt von Brennkraftmaschinen, welches einen Einlaß, (13) für die Ansaugluft und mehrere voneinander abgedichtete Saugkanäle (17) mit zylinderseitigen Austritten (18) aufweist, wobei im Saugrohr ein Einbauraum (11) zur Aufnahme mindestens einer Einlegekomponente zur Bildung der Saugkanäle (17) im Inneren eines Saugrohrgehäuses (10) vorgesehen ist, wobei sich im Inneren der mindestens einen Einlegekomponente ein Sammelraum (14) für die Ansaugluft befindet, der mit den Saugkanälen kommuniziert und wobei der Einbauraum zumindest in den Bereichen, in denen das Saugrohrgehäuse (10) mit der mindestens einen Einlegekomponente in Kontakt kommt, zylindrisch ausgeführt ist, **dadurch gekennzeichnet, daß** die Einlegekomponente aus Stellscheiben (37) und Dichtscheiben (41) besteht, die aneinander abwechselnd und gegeneinander dichtend durch mindestens eine Welle (36) gelagert sind, wobei die Dichtscheiben (41) in den zylindrischen Bereichen des Einbauraumes (11) anliegen und die Verstellscheiben einen Antrieb (23) aufweisen.

2. Saugrohr nach Anspruch 1, wobei das Saugrohr für eine Brennkraftmaschine mit v-förmiger Zylinderanordnung geeignet ist, wobei sich die Saugkanäle (17) schneckenförmig um den Einbauraum (11) winden und jeweils benachbarte Saugkanäle in entgegengesetzter Richtung durchströmt werden, **dadurch gekennzeichnet, daß** der Antrieb (23) derart ausgebildet ist, daß eine gegensinnige Drehung jeweils benachbarter Stellscheiben (41) zustandekommt.

3. Saugrohr nach Anspruch 2, **dadurch gekennzeichnet, daß** jede zweite Stellscheibe als feste Stellscheibe (37f), die verdrehsicher auf der Welle (36) angebracht ist, ausgeführt ist, und die anderen Stellscheiben als lose Stellscheiben (371) drehbar auf der Welle gelagert sind, wobei letztere über ein Umkehrgetriebe durch eine der benachbarten festen Stellscheiben (37f) antreibbar sind.

4. Saugrohr nach Anspruch 2, **dadurch gekennzeichnet, daß** der Antrieb zwei gegensinnig drehende Wellen (36a, 36b) aufweist, wobei die Stellscheiben (37) abwechselnd fest auf eine der beiden Wellen aufgesteckt sind und die Dichtscheiben (41) eine Außenkontur aufweisen, welche die Konturen der Stellscheiben beider Wellen beinhaltet.

5. Saugrohr nach Anspruch 2, **dadurch gekennzeichnet, daß** der Antrieb zwei gegensinnig drehbare Wellen (36a, 36b) aufweist, die über Zahnräder (55) jeweils mit jeder zweiten der Stellscheiben (37) über eine an der Stellscheibe angebrachte Innenverzahnung (51) drehmomentschlüssig verbunden sind, während außerdem auf den Wellen (36a, 36b) und mindestens einer Achse (53) Losräder zur Lagerung der Stellscheiben vorgesehen sind.

6. Saugrohr für den Ansaugtrakt von Brennkraftmaschinen nach Anspruch 1, **dadurch gekennzeichnet, daß** die Einlegekomponente mit einer weiteren Einlegekomponente und dem Saugrohrgehäuse einen Baukasten bildet, wobei die weitere Einlegekomponente ein hohles Einlegeteil (33) ist, durch das eine unveränderliche Geometrie der Saugkanäle (17) festgelegt ist, in den der Einlaß (13) mündet und der Öffnungen (35) zu den einzelnen Saugkanälen (17) aufweist.

7. Saugrohr für den Ansaugtrakt von Brennkraftmaschinen nach Anspruch 1, **dadurch gekennzeichnet, daß** die Einlegekomponente mit einer weiteren Einlegekomponente und dem Saugrohrgehäuse einen Baukasten bildet, wobei die weitere Einlegekomponente eine Schaltwalze (15) aufweist, welche drehbar gelagert ist und einen Antrieb (23) aufweist, wobei die Länge des Ansaugweges zwischen Einlaß (13) und Austritten (18) von der Winkelstellung der Schaltwalze abhängt, wobei zwischen der Schaltwalze (15) und den Saugkanälen (17) eine Zylinderwandung (26) angeordnet ist und wobei die Zylinderwandung mehrere Fenster (27) pro Saugkanal (17) aufweist, die in Abhängigkeit von der Winkelstellung der Schaltwalze (15) eine Verbindung zwischen einem im Inneren der Schaltwalze liegenden Sammelraum (14) und den Saugkanälen (17) herstellen und in anderen Winkelstellungen durch zwischen der Schaltwalze und der Zylinderwandung untergebrachte Fensterdichtungen (28) verschlossen sind.

8. Saugrohr nach Anspruch 7, **dadurch gekennzeichnet, daß** die Zylinderwandung (26) als Teil der weiteren Einlegekomponente ausgeführt ist und derart in den Einbauraum (11) eingesetzt ist, daß sie die Saugkanäle untereinander abdichtet.

9. Saugrohr nach einem der Ansprüche 7 oder 8, wobei das Saugrohr für eine Brennkraftmaschine mit v-förmiger Zylinderanordnung geeignet ist, wobei sich die Saugkanäle (17) schneckenförmig um den Einbauraum (11) winden und jeweils benachbarte Saugkanäle in entgegengesetzter Richtung durchströmt werden, **dadurch gekennzeichnet, daß** die Fenster (27) derart versetzt auf der Schaltwalze (15) angeordnet sind, daß sie durch Drehung der Schaltwalze jeweils diejenigen der Fenster (27) abdecken, die bei den Saugkanälen entgegengesetzter Durchflußrichtung die gleiche Saugrohrlänge gewährleisten.

10. Saugrohr nach einem der Ansprüche 7 bis 9, **dadurch gekennzeichnet, daß** die Fensterdichtungen (28) in Fensternuten (31) in der Schaltwalze (15) geführt sind und durch Federelemente (32), die sich im Nutgrund der Fensternuten abstützen, an die Zylinderwandung angedrückt werden.

## Claims

1. Induction pipe for the intake duct of internal combustion engines, which pipe includes an inlet (13) for the intake air and a plurality of suction ducts (17), which are sealed from one another and have outlets (18) on the cylinder side, an installation chamber (11) being provided in the induction pipe to accommodate at least one insert component to form the suction ducts (17) in the interior of an induction pipe housing (10), wherein a collecting chamber (14) for the intake air is situated in the interior of at least one insert component and communicates with the suction ducts, and wherein the installation chamber has a cylindrical configuration, at least in the regions where the induction pipe housing (10) comes into contact with at least one insert component, **characterised in that** the insert component comprises adjusting discs (37) and sealing discs (41), which are mounted alternately adjacent one another and are sealed from one another by at least one shaft (36), the sealing discs (41) lying in the cylindrical regions of the installation chamber (11), and the adjusting discs having a drive (23).

2. Induction pipe according to claim 1, wherein the induction pipe is suitable for an internal combustion engine with a V-shaped cylinder arrangement, the suction ducts (17) winding helically around the installation chamber (11), and respectively adjacent suction ducts being traversed in opposite directions, **characterised in that** the drive (23) is configured in such a manner that a rotation, in opposite directions, of respectively adjacent adjusting discs (41) occurs.

3. Induction pipe according to claim 2, **characterised in that** every second adjusting disc is configured as a fixed adjusting disc (37f), which is mounted on the shaft (36) in a non-rotatable manner, and the other adjusting discs are rotatably mounted on the shaft as loose adjusting discs (371), the latter discs being drivable by one of the adjacent fixed adjusting discs (37f) via a reversing gear.

4. Induction pipe according to claim 2, **characterised in that** the drive includes two contrarotating shafts (36a, 36b), the adjusting discs (37) being placed upon one of the two shafts alternately in a fixed manner, and the sealing discs (41) having an outer contour which contains the contours of the adjusting discs of both shafts.

5. Induction pipe according to claim 2, **characterised in that** the drive includes two contrarotatable shafts (36a, 36b), which are respectively connected to every second adjusting disc (37) in a torque-locking manner via toothed wheels (55) through an internal toothing (51) provided on the adjusting disc, while loose wheels for supporting the adjusting discs are also provided on the shafts (36a, 36b) and on at least one spindle (53).

6. Induction pipe for the induction tract of internal combustion engines according to claim 1, **characterised in that** the insert component forms a structural unit with one additional insert component and the induction pipe housing, the additional insert component being a hollow insert member (33), whereby an invariable geometry of the suction ducts (17) is established, the inlet (13) terminating in said ducts and having apertures (35) leading out to the individual suction ducts (17).

7. Induction pipe for the induction tract of internal combustion engines according to claim 1, **characterised in that** the insert component forms a structural unit with one additional insert component and the induction pipe housing, the additional insert component having a controller drum (15), which is rotatably mounted and has a drive (23), the length of the intake path between inlet (13) and outlets (18) being dependent on the angular position of the controller drum, a cylinder wall (26) being disposed between the controller drum (15) and the suction ducts (17), and the cylinder wall having a plurality of windows (27) per suction duct (17), which windows, in dependence on the angular position of the controller drum (15), establish a connection between a collecting chamber (14), which lies in the interior of the controller drum, and the suction ducts (17), and said windows are closed in other angular positions by window seals (28) accommodated between the controller drum and the cylinder wall.

8. Induction pipe according to claim 7, **characterised in that** the cylinder wall (26) is configured as part of the additional insert component and is inserted into the installation chamber (11) in such a manner that it seals the suction ducts one below the other.

9. Induction pipe according to one of claims 7 or 8, wherein the induction pipe is suitable for an internal combustion engine with a V-shaped cylinder arrangement, the suction ducts (17) winding helically around the installation chamber (11), and respectively adjacent suction ducts being traversed in opposite directions, **characterised in that** the windows (27) are disposed on the controller drum (15) in such an offset manner that, by rotating the controller drum, they respectively cover those windows (27) which ensure the same induction pipe length for the suction ducts of opposite throughflow directions.

10. Induction pipe according to one of claims 7 to 9, **characterised in that** the window seals (28) extend in window grooves (31) in the controller drum (15) and are pressed against the cylinder wall by resilient members (32), which are supported in the base of the window grooves.

## Revendications

1. Tube d'aspiration pour la ligne d'admission de moteur à combustion interne, dans lequel :
- l'air aspiré traverse une entrée (13) et plusieurs canaux d'aspiration (17) étanches les uns par rapport aux autres, avec leurs sorties (18) situées du côté des cylindres,
- un volume d'insertion (11) sert à loger au moins un composant incorporé afin de former les canaux d'aspiration (17) à l'intérieur du boîtier (10) du tube d'aspiration,
- à l'intérieur d'au moins un composant incorporé se trouve une chambre collectrice (14) pour l'air aspiré, qui communique avec les canaux d'aspiration, et
- le volume d'insertion est cylindrique, au moins dans les zones où le boîtier du tube d'aspiration (10) est en contact avec au moins un composant incorporé,
**caractérisé en ce que**
les composants incorporés sont constitués de disques de réglage (37) et de disques d'étanchéité (41), montés en alternance et avec étanchéité entre eux, par l'intermédiaire d'au moins un arbre (36), les disques d'étanchéité (41) étant appliqués sur les zones cylindriques de la chambre d'insertion (11) tandis que les disques de réglage sont dotés d'un entraînement (23).

2. Tube d'aspiration selon la revendication 1 destiné à un moteur à cylindres en V, comportant des canaux d'aspiration (17) enroulés en hélice autour du volume d'insertion (11), la circulation de l'air dans chaque canal s'effectuant en sens inverse de celui dans les canaux voisins,
**caractérisé en ce que**
l'entraînement (23) est conçu de manière que chaque fois, deux disques de réglage (37) voisins tournent dans des sens opposés.

3. Tube d'aspiration selon la revendication 2,
**caractérisé en ce qu'**
un disque de réglage sur deux est un disque fixe (37f), monté sans tourner sur l'arbre (36) tandis que les autres disques de réglage (371) tournent librement sur l'arbre (36) et sont entraînés par un des disques de réglage fixes (37f) voisins, par l'intermédiaire d'un engrenage d'inversion.

4. Tube d'aspiration selon la revendication 2,
**caractérisé en ce que**
l'entraînement comporte deux arbres (36a, 36b) tournant en sens contraire, les disques de réglage (37) étant emmanchés fixement et alternativement sur un des deux arbres, tandis que les disques d'étanchéité (41) présentent un contour externe qui contient les contours des disques de réglage des deux arbres.

5. Tube d'aspiration selon la revendication 2,
**caractérisé en ce que**
l'entraînement comporte deux arbres (36a, 36b), tournant en sens contraire, qui sont reliés avec transmission de couple par des pignons dentés (55), chacun à un pignon sur deux des disques de réglage (37), par l'intermédiaire d'une denture interne (51) portée par le disque de réglage, des roues libres étant prévues par ailleurs sur les arbres (36a, 36b) et au moins sur un axe (53) pour servir de paliers aux disques de réglage.

6. Tube d'aspiration pour la ligne d'admission de moteurs à combustion interne selon la revendication 1,
**caractérisé en ce que**
le composant incorporé, avec un second composant incorporé et le boîtier du tube d'aspiration, forme un module de construction, le second composant incorporé étant une partie incorporée (33) creuse qui détermine une géométrie invariable des canaux d'aspiration (17), module dans lequel débouche l'entrée (13), et qui présente des ouvertures (35) sur les différents canaux d'aspiration (17).

7. Tube d'aspiration pour la ligne d'admission de moteurs à combustion interne selon la revendication 1,
**caractérisé en ce que**
- le composant incorporé, avec un second composant incorporé et le boîtier du tube d'aspiration, forme un module de construction, dans lequel le second composant incorporé présente un cylindre à fente (15) monté tournant et équipé d'un entraînement (23), la longueur du parcours d'aspiration entre l'entrée (13) et la sortie (18) dépendant de la position angulaire du cylindre à fente (15),
- entre le cylindre à fente (15) et les canaux d'aspiration (17) se trouve une paroi de cylindre (26) percée pour chaque canal d'aspiration (17), de plusieurs fenêtres (27), qui en fonction de la position angulaire du cylindre à fente (15) établissent une liaison entre une chambre collectrice (14) située à l'intérieur du cylindre à fente et les canaux d'aspiration (17) tandis que, dans d'autres positions angulaires, elles sont obturées par des joints de fenêtre (28) placés entre le cylindre à fente et la paroi de cylindre.

8. Tube d'aspiration selon la revendication 7,
**caractérisé en ce que**
la paroi de cylindre (26) est une partie du second composant incorporé, qui est montée dans le volume d'insertion (11) de manière à assurer l'étanchéité des canaux d'aspiration les uns par rapport aux autres.

9. Tube d'aspiration selon l'une quelconque des revendications 7 ou 8, destiné à un moteur à cylindres en V, comportant des canaux d'aspiration (17) enroulés en hélice autour du volume d'insertion (11), la circulation de l'air dans chaque canal s'effectuant en sens inverse de celui dans les canaux voisins,
**caractérisé en ce que**
sur le cylindre à fente (15) les fenêtres (27) sont décalées entre elles de manière que, quand le cylindre tourne, elles découvrent les fenêtres (27) qui assurent la même longueur de tube d'aspiration, dans les canaux d'aspiration à sens d'écoulement inverse.

10. Tube d'aspiration selon l'une quelconque des revendications 7 à 9,
**caractérisé en ce que**
les joints d'étanchéité de fenêtre (28) se déplacent en étant guidés dans des rainures de fenêtre (31) prévues dans le cylindre à fente (15) et sont appliqués avec pression sur la paroi des cylindres, par des éléments élastiques (32) qui s'appuient sur le fond des rainures de fenêtre.
